# EUROPEAN PATENT APPLICATION

(11) **EP 1 355 367 A2**
(43) Date of publication of application: **22.10.2003**
(21) Application number: 03001286.8
(22) Date of filing: 22.01.2003
(51) Int. Cl.: H01M 2/30, H01M 2/32

(54) **Terminal post for lead-acid batteries with improved sealing properties**

(30) Priority: 08.04.2002 CN 02229878 U
(71) Applicant: CSB Battery Co., Ltd., Beitou Area, Taipei City (TW)
(72) Inventor: Wang, Pai-Hua, Taipei City, Taiwan R.O.C. (TW); Lee, Shen-Hsiung, Taipei City, Taiwan R.O.C. (TW)
(74) Representative: UEXKÜLL & STOLBERG

(57) **Abstract**

A terminal post (21) capable of delaying acidification thereof, mainly referring to the surface of a terminal post being formed with a plurality of grooves or protruding rings, so as to enlarge the contact surface between the posts and resin (12) filled in the interior of the lead-acid battery (1), for the purpose of avoiding or delaying sulfate solution to infiltrate towards the posts through capillary action, thus delaying the acidification of the terminal posts, as well as protecting the terminal posts and the lead-acid battery terminals, and decreasing the possibility of occurring short circuit by lead-acid batteries.

## Description

### FIELD OF THE INVENTION

The present invention relates to a kind of terminal post utilized in lead-acid batteries, more particularly, a terminal post capable of delaying acidification thereof, mainly referring to the surface of the terminal post being formed with grooves, so as to delay the acidification process thereof.

### DESCRIPTION OF THE RELATED ART

It is extremely common to use batteries in our daily lives, and lead-acid batteries are a battery system that has long history of utilization, wherein lead is used as the positive electrode, and lead dioxide the negative electrode, with the electrolyte being 27% to 45% sulfate solution. Inasmuch as the lead-acid battery is designed to have greater electricity-generating capacity, greater range of operational temperatures, simpler structure, more fully-developed technology, cheaper prices and longer cycle life, the total production quantity and production value thereof have thus occupied significant portions in battery production, with the application thereof mainly being in fields of automobile industry and uninterruptible power supply system.

The terminal post, a crucial member in a lead-acid battery, is usually made of lead or lead alloy, utilized for electrically connecting the external terminals of the lead-acid battery and the internal electrode plates; provided the terminal post is damaged by internal factors, external terminals are prone to be adversely affected, thus causing short circuitry. Therefore, to avoid or delay the possible damage against the terminal post has also become an important issue.

A terminal post utilized in a lead-acid battery, with tremendous amount of sulfate solution being contained in a lead-acid battery, is prone to be acidified over time, and external terminals might further be corroded, thus causing short circuitry.

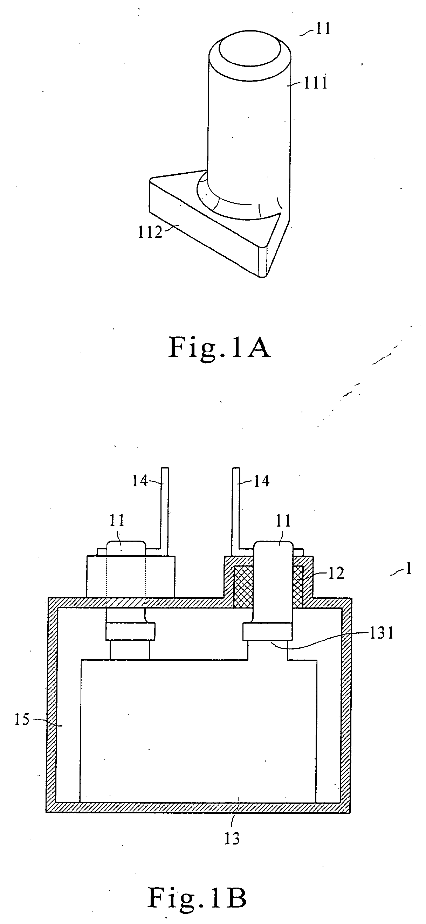

Please refer to Fig. 1A and Fig. 1B, wherein a structural perspective view of a conventional tapered terminal post and a sectional structural view of a lead-acid battery are shown. Shown in Fig. 1A, the conventional tapered terminal post 11 utilized in a lead-acid battery 1 is made of lead, with the outer shape being the triangle base 112, and a post 111, extended vertically upwards from one of the angles of the triangular base 112, is a cylinder-shaped body with smooth surface. In Fig. 1B, the lead-acid battery 1 is installed with a plurality of electrode plates 13 arrayed in parallel, with two adjacent electrode plates being installed in reversed direction. Two contact portions 131 are protrusively installed upwards on one side of each electrode plate 13 so as to contact the bases 112 of the terminal posts 11. The top ends of the posts 111 are connected to the terminals 14 of the lead-acid battery. Therefore, the function of a terminal post 11 is to act as an electrical connecting device between the internal electrode plates 13 and the external terminals 14 of the lead-acid battery 1, thus transmitting the voltage from the electrode plate 13 to the terminal 14.

Since the lead-acid battery 1 contains sulfate solution 15, resin 12 is filled in the middle section of the posts 111 to insulate the sulfate solution 15, so that the terminals 14 will not be acidified or corroded. However, an operational temperature is to be produced during charging and discharging of the lead-acid battery 1, so that a slit is formed on the contacting surface between a terminal post 11 and resin 12 after being heated, due to the fact that these two materials have different inflation coefficient toward various temperatures. Because of the smooth surface of the post 111, the slit between the terminal post 11 and resin 12 is formed regularly and proportionally without being able to stop the sulfate solution 15 from infiltration, so that the sulfate solution 15, through capillary action, is to infiltrate upwards through the slit between the post 111 and resin 12 in more equal speed, thus causing leakage and the acidification of the terminal post 11. The capillary action refers to the nature of liquid to infiltrate slowly within other materials; different liquids present different degrees of capillary action. Generally speaking, the higher the temperature of liquids is, the more obvious the capillary action is. Thus the characteristics of liquids are crucial factors to the capillary action occurred thereof.

The sulfate solution 15, after acidifying the terminal posts 11, proceeds to acidify and corrode the external terminals 14 through infiltration, eventually resulting in short circuitry.

Therefore, the present invention is disclosed for providing with the solution of how to delay the acidification of terminal posts in lead-acid batteries and thus slows down the acidification process.

### SUMMARY OF THE INVENTION

In view of the fact that the terminal posts in lead-acid batteries are speedily acidified, thus causing lead-acid batteries to short circuitry, which may further cause undesirable consequences.

The object of the present invention is to provide a terminal post capable of delaying acidification thereof, which is an integrally formed electrical conductor comprising a base and a post extending vertically upwards from the base. Grooves, installed on the surface of the posts, are utilized for delaying the acidification of the posts, and further avoid causing acidification and corrosion of the lead-acid battery terminals and thus decrease possibility of short circuitry of the lead-acid battery.

Preferably, the base thereof is formed as triangle, so as to expedite the contact the contact portion of the electrode plate.

Preferably, the shape of the post is formed as a cylinder, so as to expedite the engagement with external terminals.

There are at least two grooves installed on the surface of the post.

The surface of the post can be installed with protruding rings instead of grooves; at least two or more protruding ring are installed thereon.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Fig. 1A shows a structural perspective view of the conventional tapered terminal post;
Fig. 1B shows a sectional structural view of the lead-acid battery;
Fig. 2A shows a structural perspective view of the threaded terminal post of the present invention;
Fig. 2B shows an embodiment of the terminal post of the present invention employed in a lead-acid battery;
Fig. 3A shows a curve of the experiment outcome regarding both the terminal post of the present invention and the conventional terminal post being the negative electrode terminal post;
Fig. 3B shows a curve of the experiment outcome regarding both the terminal post of the present invention and the conventional terminal post being the positive electrode terminal post; and
Fig. 4A, 4B, 4C, 4D and 4E are embodiments for each type of the terminal post of the present invention.

### DETAILED DESCRIPTION OF THE PREFERRED EMBODIMENTS

The following is a detailed description of the best presently known modes of carrying out the present inventions. This description is not to be taken in a limiting sense, but is made merely for the purpose of illustrating the general principles of the present inventions.

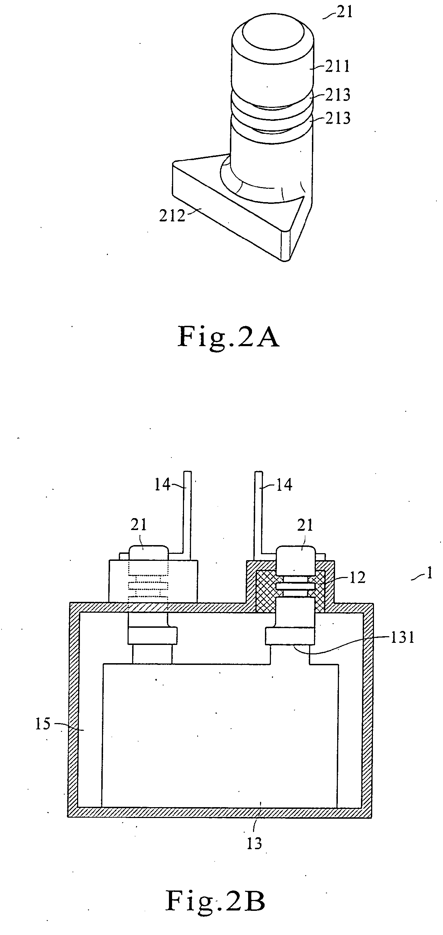

Please refer to Fig. 2A and 2B, wherein the terminal post 21 capable of delaying acidification thereof in the present invention is employed in a conventional lead-acid battery 1 comprising an electrode plate 13, terminals 14 and sulfate solution 15. The terminal post 21, made of lead or lead alloy, is an electrical conductor integrally formed, comprising a base 212 and a post 211. In the preferred terminal post, the base thereof, formed as triangle, is utilized for contacting the contact portion 131 of the electrode plate 13, and thus transmitting the voltage of the electrode plate 13. The post 211 is formed by extending vertically upwards from one of the vertical angles of the triangular base 112. Preferably, the shape of the post 211 is formed as a cylinder. The tips of the posts 211 are electrically connected to the terminals 14 at the exterior of the lead-acid battery 2, so that the terminals 14 are to receive the voltage from the electrode plate 13. At least two grooves are further installed on the surface of the post 211, so as to increase the contacting areas with resin 12, and thus delay the acidification of the terminal posts 21. The object of the grooves 213 is elaborated in later texts.

Please continue refer to Fig. 2B, wherein stuffed resin 12 is to fully wrap the middle section of the posts 211 of the terminal posts 21, with the purpose of preventing sulfate solution 15 from leakage, preventing terminals 14 from acidification and corrosion and causing short circuitry. Although an operational temperature is to be produced during charging and discharging of the lead-acid battery 2, and the terminal posts 21 and resin 12 are made of materials having different inflation coefficient toward various temperatures, yet because the number of slits on the horizontal surface of the grooves 213 are much less than that on the vertical surface of the grooves 213, thus inhibiting liquids from infiltrating upwards through capillary action, infiltration by sulfate solution toward the posts through capillary action is effectively prevented and delayed, thus the acidification process of the terminal posts is extended, so as to protect terminal posts and terminals of lead-acid batteries, and decrease the possibility of short-circuit occurrence of lead-acid batteries.

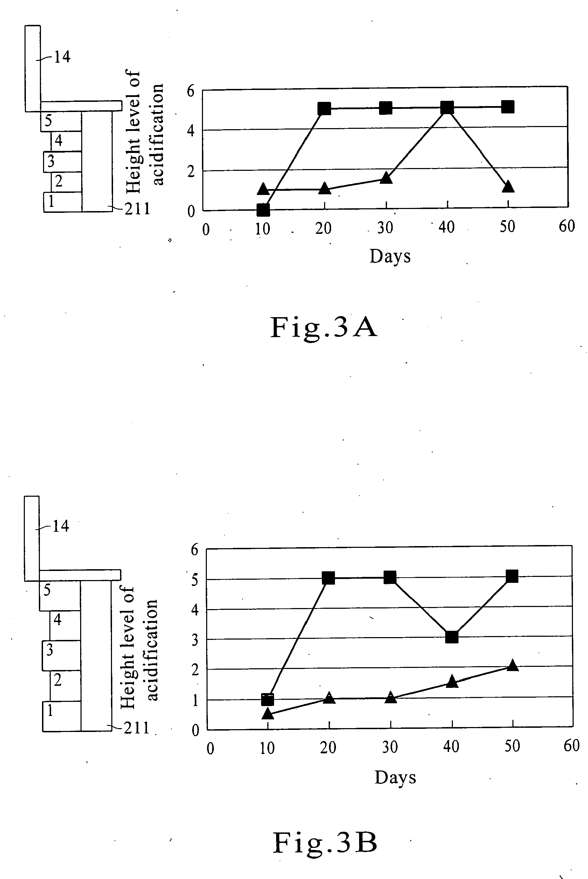

Subsequently shown by Fig. 3A and 3B are the curves of the experiment outcome of the thread-shaped terminal posts as negative and positive electrodes, along with Fig. 1B and 2B for reference thereof. The experiment aims at comparing time period spent for reaching height level 5 regarding acidification of both the conventional tapered terminal post 11 and the thread-shaped terminal post 21 of the present invention. Fig. 3A shows the curve regarding the progress of acidification of the terminal posts as negative electrode, wherein the curve with symbol ■ represents the number of days for the progress of acidification on the conventional tapered terminal post 11 to reach the tip of the post, whereas the curve with symbol ▲ represents the number of days for the progress of acidification on the thread-shaped terminal post 21 of the present invention to reach the tip of the post. Fig. 3B shows the curve regarding the progress of acidification of the terminal posts as positive electrode, wherein the curve with symbol ■ represents the number of days for the progress of acidification on the conventional tapered terminal post 11 to reach the tip of the post, whereas the curve with symbol ▲ represents the number of days for the progress of acidification on the thread-shaped terminal post 21 of the present invention to reach the tip of the post.

As shown in Fig. 3A, with all things being equal, the first measurement of the experiment was conducted after 10 days, showing that the height level of acidification for the conventional tapered terminal post 11 is 0, whereas the height level of acidification for the thread-shaped terminal post 21 is 1, a result manifesting that both terminal posts effectively inhibited the acidification of posts thereof. After 20 days, the second measurement was conducted, with the resulting being that, the height level of acidification for the conventional tapered terminal post 11 is 5, whereas the height level of acidification for the thread-shaped terminal post 21 is still 1. Therefore, it can be inferred from the second measurement that the post of the tapered terminal post 11 was entirely acidified, whereas the post 211 of the thread-shaped terminal post 21, being installed with grooves 213, was capable of adversely affecting the upward infiltration of sulfate solution through capillary action, thus inhibiting the acidification process on the post 211. The third measurement was conducted after 30 days, with the result being that the height level for the acidification of the thread-shaped terminal post 21 of the present invention is between 1 to 2, showing the acidification of the post still being inhibited. The fourth measurement was conducted after 40 days, with the result being that, the height level for the thread-shaped terminal post is 5, showing the total acidification thereof. However, the fifth measurement was conducted after 50 days, with the result being that the height level for the thread-shaped terminal post receded back to 1. Such drastic variation of height levels is caused by the improper filling effect of resin 12 at grooves 213, which led to cavitous conditions and thus stopped the capillary action of sulfate solution.

As shown in Fig. 3B, the height level of acidification for the post of the tapered terminal post 11 is 1, whereas the height level of acidification for the post of the thread-shaped terminal post 21 is lower than 1, manifesting that both terminal posts effectively inhibited the acidification of posts thereof. The second measurement was conducted after 20 days, with the result being that the height level of acidification for the post of the tapered terminal post 11 is already 5, whereas the height level of acidification for the post of the thread-shaped terminal post 21 is 1. Therefore, it can be inferred from the second measurement that the post of the tapered terminal post 11 was entirely acidified, whereas the post 211 on the thread-shaped terminal post 21, being installed with grooves 213, was capable of adversely affecting the upward infiltration of sulfate solution through capillary action, thus inhibiting the acidification process on the terminal post 21. The fourth and fifth measurements were subsequently conducted after 40 and 50 days respectively, showing that the terminal post 21 is still capable of inhibiting the acidification thereof, because of the slits at the concave portion of each groove 213 and cavities between adjacent grooves 213.

Through data acquired from the foregoing experiments, it is clear that grooves installed on the thread-shaped terminal post 21 are capable of delaying and inhibiting the acidification process of the terminal post, whether such terminal post is applied as positive or negative electrode. Furthermore, after 50 days, the height level of acidification can be effectively controlled between 1 and 2, thus effectively preventing sulfate solution 15 from adversely affecting the terminals 14 of the lead-acid battery.

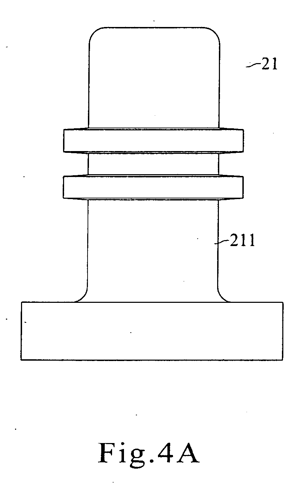

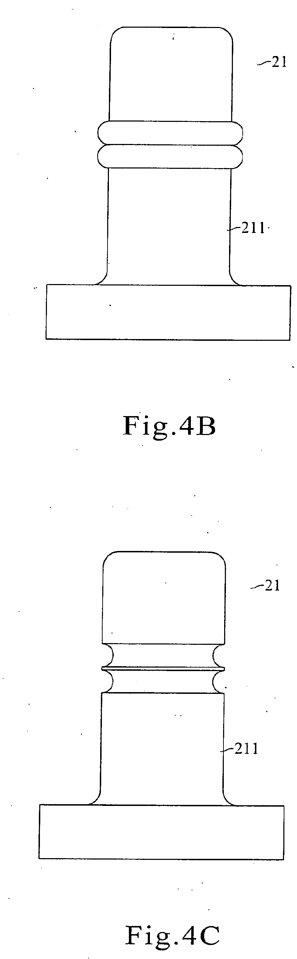

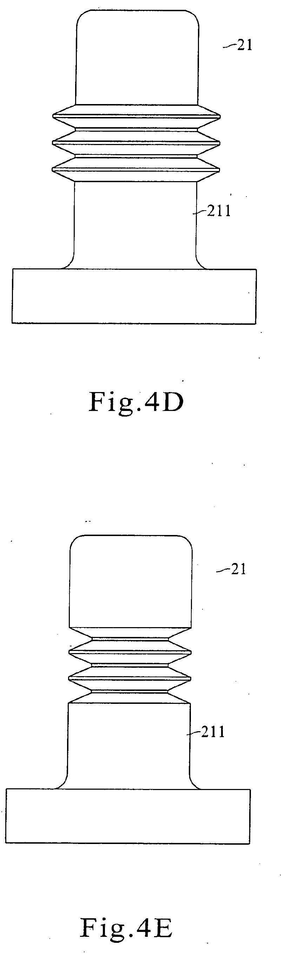

Apart from forming the grooves 213, various forms can be shaped on the post 211 of the terminal post 21 to achieve the identical function of delaying and inhibiting the acidification of the terminal post 21. Please refer to Fig. 4A, 4B, 4C, 4D and 4E, wherein: Fig. 4A shows that the post 211 is formed with square-shaped protruding rings having certain distance therebetween; Fig. 4B shows that the post 211 is formed with two arc-shaped protruding rings adjacent to one another; Fig. 4C shows that the post 211 is formed with two arc-shaped grooves adjacent to one another; Fig. 4D shows that the post 211 is formed with three indented protruding rings adjacent to one another; Fig. 4E shows that the post 211 is formed with three indented grooves adjacent to one another.

It can be inferred through the foregoing Fig. 4A, 4B, 4C, 4D and 4E that: it can be allowed for the post 211 of the terminal post 21 of the invention to be formed with at least two protruding rings or grooves thereon, which, formed with any geometric form, can be both installed on the identical post. Or protruding rings or grooves can be installed adjacent to one another, having distances therebetween, or alternating the two foregoing means. In other words, the object of the present invention can be achieved as long as the unsmooth surface of the post 211 enlarges the contacting surface between the post 211 and resin filled inside the lead-acid battery, thus delaying the process of separation of the post 211 from resin due to the inflation and deflation of the post 211.

Although the present invention has been described in considerable detail with reference to certain preferred embodiments thereof, those skilled in the art can easily understand that all kinds of alterations and changes can be made within the spirit and scope of the appended claims. For example, apart from triangle, various shapes can be utilized to shape the base of the terminal post; apart from cylinder, various shapes can be utilized to shape the post; any conductible material can be utilized for forming the terminal post. Therefore, the spirit and scope of the appended claims should not be limited to the description of the preferred embodiments contained herein.

## Claims

1. A terminal post capable of delaying acidification thereof, comprising a base and a post vertically extending upwards from said base, the surface of said post being unsmoothly shaped.

2. The terminal post as claimed in claim 1, wherein the surface of said post being unsmoothly shaped refers to that said post is formed with at least one groove.

3. The terminal post as claimed in claim 1, wherein the surface of said post being unsmoothly shaped refers to that said post is formed with at least one protruding ring.

4. The terminal post as claimed in claim 1, wherein the surface of said post being unsmoothly shaped refers to that said post is formed with at least one groove and at least one protruding ring.

5. The terminal post as claimed in claim 2, provided there are at least two said grooves, said grooves are installed adjacent to one another, having distances therebetween, or by alternating two said methods.

6. The terminal post as claimed in claim 3, provided there are at least two said protruding rings, said protruding rings are installed adjacent to one another, having distances therebetween, or by alternating two said methods.

7. The terminal post as claimed in claim 4, wherein said grooves and said protruding rings are installed adjacent to one another, having distances therebetween, or by alternating two said methods.

8. The terminal post as claimed in claim 1, wherein said base is shaped as triangle or polygon.

9. The terminal post as claimed in claim 1, wherein said post is shaped as cylinder.

10. The terminal post as claimed in claim 1, wherein said terminal post can be formed with any conductible material .
